# FASCICULE DE BREVET EUROPEEN

(11) **EP 2 402 094 B1**
(45) Date de publication et mention de la délivrance du brevet: **05.06.2013**
(21) Numéro de dépôt: 11170273.4
(22) Date de dépôt: 17.06.2011
(51) Int. Cl.: B08B 3/12, B08B 7/02, B08B 9/032, G01N 9/00

(54) **Procédé de nettoyage du tube en U de la cellule de mesure d'un densimètre**
Reinigungsverfahren eines U-Rohrs der Messzelle eines Dichtemessgeräts
Method for cleaning the U-tube in the measuring cell of a densitometer

(30) Priorité: 02.07.2010 FR 1055357
(43) Date de publication de la demande: 04.01.2012
(73) Titulaire: Instrumentation Scientifique de Laboratoire (ISL), 14653 Carpiquet (FR)
(72) Inventeur: Urvantsau, Viachaslau, 14320 Fontenay le Marmion (FR); Marie, Patrick, 14980 ROTS (FR)
(74) Mandataire: Cabinet HERRBURGER

(56) Documents cités:
- US-A- 3 320 791
- US-A- 4 602 498

## Description

### Domaine de l'invention

La présente invention a pour objet un procédé de nettoyage du tube en U de la cellule de mesure d'un densimètre.

### Etat de la technique

Parmi les mesures physiques devant être effectuées dans le cadre des procédés industriels, celle de la densité figure parmi les plus fréquemment nécessaires.

A cet effet, les fabricants proposent sur le marché, une gamme de densimètres basés sur différents principes, dont tous présentent des avantages et des inconvénients.

Un densimètre pouvant être utilisé de manière satisfaisante pour mesurer la densité d'un échantillon est équipé d'une cellule de mesure comportant les éléments suivants :
- Une enceinte isotherme qui définit à sa partie interne, une chambre de mesure fermée par un bouchon entouré d'un joint élastique,
- Un tube en U destiné à être rempli par un échantillon à analyser et s'étendant dans la chambre de mesure, ce tube en U étant fixé au bouchon au niveau de sa base, constituée par ses extrémités libres qui font saillie vers l'extérieur de la chambre de mesure pour permettre l'injection de l'échantillon à analyser par un orifice d'injection et son évacuation par un orifice d'évacuation, et
- Des moyens permettant de faire vibrer le tube en U, ainsi que des moyens de mesure de la réponse vibratoire de ce tube.

A titre d'exemple, le tube en U peut être maintenu à la masse et les moyens permettant de faire vibrer ce tube peuvent être constitués par :
- Un élément ferromagnétique équipant le tube en U à sa partie médiane,
- Une plaque de lecture conductrice isolée maintenue à une différence de potentiel par rapport au tube en U et fixée au bouchon en regard de ce tube de façon à définir un condensateur avec celui-ci, et
- Une bobine d'excitation électromagnétique montée au droit de l'élément ferromagnétique.

Le principe de la mesure de la densité d'un échantillon à l'aide d'un tel densimètre, consiste à faire vibrer le tube en U à la fréquence de résonance et à déterminer cette fréquence à partir des variations de la tension aux bornes du condensateur.

La fréquence de résonance permet en effet de calculer en première approximation, la densité de l'échantillon à analyser en se basant sur une équation standard connue en elle-même, et à partir d'une calibration préalable du densimètre.

Après chaque analyse, il est nécessaire de nettoyer et de rincer très soigneusement le tube en U de la cellule de mesure afin de ne pas fausser l'analyse suivante en raison de la présence de résidus d'échantillon déposés sur les parois de ce tube.

Or, un tel nettoyage correspond à une opération particulièrement longue et incommode, dans la mesure où elle nécessite la mise en oeuvre de plusieurs étapes successives.

La première de ces étapes consiste à injecter par l'orifice d'injection du tube en U, sous pression ou par aspiration, un premier solvant ou solvant de rinçage qui doit obligatoirement être compatible avec l'échantillon préalablement analysé et évacué par l'orifice d'évacuation, c'est-à-dire apte à dissoudre cet échantillon.

Ce solvant de rinçage peut être injecté sous la forme d'un flux homogène ou d'une mousse.

Après évacuation de ce premier solvant par l'orifice d'évacuation, il est nécessaire d'injecter par l'orifice d'injection, un second solvant volatil ou solvant de séchage, qui doit ensuite être lui aussi évacué par l'orifice d'évacuation avant séchage du tube par ventilation.

Or, un tel procédé présente de multiples inconvénients dont le premier est lié à la nécessité d'utiliser des quantités significatives de deux solvants différents.

La quantité de solvant de rinçage devant être mise en oeuvre est particulièrement importante, dans le cas d'échantillons visqueux et/ou adhésifs.

De plus, lorsque l'on analyse des échantillons différents non miscibles entre eux, il est nécessaire d'utiliser différents types de solvants de rinçage.

A cela s'ajoute l'obligation, d'effectuer périodiquement des opérations de désincrustation pour éliminer les dépôts solides ayant fortement adhéré aux parois du tube en U.

Or ces opérations nécessitent l'utilisation de réactifs à base d'acides forts très toxiques tels qu'à titre d'exemple, des solutions d'acide chromique chaudes qui sont particulièrement agressives et en outre cancérigènes.

Un procédé de nettoyage du tube en U de la cellule de mesure d'un densimètre du type susmentionné est à titre d'exemple décrit dans le document US 4 602 498 A qui décrit un procédé selon le préambule de la revendication 1.

### But de l'invention

L'invention a pour objet de proposer un procédé de nettoyage du tube en U de la cellule de mesure d'un densimètre selon la revendication 1 de nature à remédier à ces inconvénients.

### Exposé et avantages de l'invention

Selon l'invention, ce procédé est caractérisé en ce qu'après l'analyse d'un échantillon on injecte un solvant de rinçage dans l'orifice d'injection, du tube en U sous pression ou par aspiration, et on soumet le bouchon sur lequel est fixée la base du tube en U à des ondes ultrasonores.

Ces ondes qui se propagent dans le solvant de rinçage entraînent la mise en vibration du tube en U et permettent d'intensifier de façon surprenante l'action de ce solvant de façon à éliminer les inconvénients du procédé de nettoyage classique.

Lors de la mise en oeuvre du procédé de nettoyage conforme à l'invention, le rayonnement ultrasonore agit en fait à plusieurs niveaux.

En premier lieu, en se propageant les ondes ultrasonores, augmentent la convection au sein du solvant, dans le volume du tube en U, et entraînent simultanément sa transformation en une mousse de nature à améliorer le transfert de masse entre celui-ci et les résidus d'échantillon déposés sur les parois du tube en U.

De plus, la propagation des ondes ultrasonores dans le solvant entraîne l'implosion de bulles de cavitation à proximité des parois internes du tube en U.

Ce phénomène de cavitation, augmente l'efficacité du nettoyage du tube en U dans la mesure où il permet d'une part de réduire la quantité de solvant nécessaire pour dissoudre les résidus d'échantillon déposés sur les parois de ce tube et d'autre part d'éliminer des résidus d'échantillon faiblement visqueux en utilisant un solvant non compatible, c'est-à-dire dans lequel ces résidus sont normalement insolubles.

De plus, on a pu se rendre compte que grâce au phénomène de cavitation, la mise en oeuvre d'ondes ultrasonores permet également de manière surprenante d'éliminer les dépôts solides ayant fortement adhéré aux parois du tube en U et donc de supprimer l'obligation d'avoir à effectuer périodiquement des opérations de désincrustation avec des réactifs toxiques.

Le rayonnement ultrasonore a en outre pour effet de nébuliser les résidus d'échantillons faiblement visqueux ayant pu s'être déposés sur les parois du tube en U.

Or, ce phénomène de nébulisation permet de diminuer de façon significative, le temps de séchage nécessaire après l'injection du second solvant, voire dans certains cas, de pulvériser la totalité des gouttes résiduelles de solvant de rinçage, même si ce solvant n'est pas volatil, rendant ainsi inutile l'injection d'un solvant de séchage.

Selon une autre caractéristique de l'invention, on fixe un transducteur à ultrasons piézo-électrique ou magnétostrictif sur le bouchon de la chambre de mesure.

La fréquence des vibrations induites par le rayonnement ultrasonore émis et transmis par ce transducteur est conditionnée par les caractéristiques de celui-ci, la masse du bouchon sur lequel est monté le tube en U et la flexibilité du joint élastique.

Cette fréquence est en règle générale comprise entre 20 et 200 kHz.

La puissance devant être mise en oeuvre dépend dans une large mesure de l'action de nettoyage recherchée.

Cette puissance doit en effet être minimum pour augmenter le transfert de masse entre le solvant de rinçage et les résidus d'échantillon déposés sur les parois du tube en U, suite au phénomène de convection mais en revanche être maximum pour permettre l'initiation des phénomènes de cavitation et de nébulisation au sein de ce solvant.

### Dessin

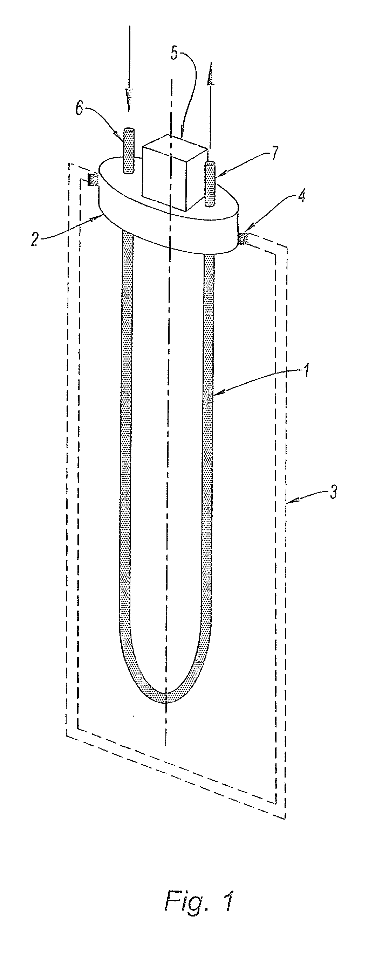

Les caractéristiques du procédé de nettoyage qui fait l'objet de l'invention seront décrites plus en détail en se référant au dessin non limitatif annexé qui est un schéma représentatif d'un dispositif permettant la mise en oeuvre de ce procédé.

### Description d'un mode de réalisation de l'invention

Selon la figure, le tube en U 1 s'étend dans une enceinte isotherme qui définit à sa partie interne, une chambre de mesure 3 schématisée en pointillé.

Cette chambre de mesure 3 est fermée par un bouchon 2 entouré d'un joint élastique 4.

Le tube en U 1, est fixé au bouchon 2 au niveau de sa base qui est constituée par ses extrémités libres.

Comme représenté sur la figure, les extrémités libres du tube en U 1, font saillie vers l'extérieur de la chambre de mesure 3 pour permettre l'injection d'un échantillon à analyser ou de solvants par un orifice d'injection 6 et son extraction par un orifice d'évacuation 7, comme schématisé par les flèches.

Un transducteur à ultrasons 5, est fixé au bouchon 2 pour convertir de l'énergie électrique en une énergie acoustique dans la gamme des ultrasons.

Cette énergie est transmise au bouchon de façon à permettre de faire vibrer le tube en U 1 et de le débarrasser des impuretés et ayant pu s'être déposées sur ses parois.

## Revendications

1. Procédé de nettoyage du tube en U de la cellule de mesure d'un densimètre, cette cellule de mesure comportant :
- une enceinte isotherme qui définit en sa partie interne une chambre de mesure (3) fermée par un bouchon (2) entouré d'un joint élastique (4),
- un tube en U (1) destiné à être rempli par un échantillon à analyser et s'étendant dans la chambre de mesure (3), ce tube en U (1) étant fixé au bouchon au niveau de sa base constituée par ses extrémités libres qui font saillie vers l'extérieur de la chambre de mesure (3) pour permettre l'injection de l'échantillon à analyser par un orifice d'injection (6) et son évacuation par un orifice d'évacuation (7), et
- des moyens permettant de faire vibrer le tube en U (1),
**caractérisé en ce que**
après l'analyse d'un échantillon, on injecte un solvant de rinçage dans l'orifice d'injection (6) du tube en U (1) et on soumet le bouchon (2) sur lequel est fixée la base du tube en U (1) à des ondes ultrasonores.

2. Procédé selon la revendication 1,
**caractérisé en ce qu'**
on fixe un transducteur à ultrasons piézo-électrique ou magnétostrictif (5) sur le bouchon (2) de la chambre de mesure (3).

3. Procédé selon l'une quelconque des revendications 1 et 2,
**caractérisé en ce que**
la fréquence des ultrasons est comprise entre 20 et 200 kHz.

## Patentansprüche

1. Reinigungsverfahren für das U-Rohr einer
Densimetermesszelle, wobei diese Messzelle
- einen isothermen Raum, der in seinem Inneren eine von einem Stöpsel (2) verschlossene Messkammer (3) definiert, wobei der Stöpsel von einer elastischen Dichtung (4) umringt ist,
- ein U-Rohr (1), das dazu bestimmt ist, mit einer zu analysierenden Probe gefüllt zu werden, und sich in die Messkammer (3) erstreckt, wobei dieses U-Rohr (1) an dem Stöpsel an der durch die freien Stöpselenden, die nach au-βerhalb der Messkammer (3) ragen, gebildeten Stöpselbasis befestigt ist, damit die zu analysierende Probe durch eine Einspritzöffnung (6) eingespritzt werden kann und durch eine Entleerungsöffnung (7) ablaufen kann, und
- Mittel, mit denen das U-Rohr (1) in Vibrationen versetzt werden kann,
aufweist, **dadurch gekennzeichnet, dass**
nach der Analyse einer Probe ein Spüllösungsmittel in die Einspritzöffnung (6) des U-Rohres (1) eingespritzt wird, und der Stöpsel (2), an welchem die Basis des U-Rohres (1) befestigt ist, Ultraschallwellen ausgesetzt wird.

2. Verfahren nach Anspruch 1,
**dadurch gekennzeichnet, dass**
ein piezoelektrischer oder magnetostriktiver Ultraschalltransducer (5) an den Stöpsel (2) der Messkammer (3) befestigt wird.

3. Verfahren nach einem der Ansprüche 1 oder 2,
**dadurch gekennzeichnet, dass**
die Ultraschallfrequenz zwischen 20 und 200 kHz liegt.

## Claims

1. Method for cleaning the U-shaped tube of the measurement cell of a densimeter, said measurement cell comprising:
- an isothermic enclosure, the internal part of which defines a measurement chamber (3) closed by a stopper (2) surrounded by a resilient seal (4);
- a U-shaped tube (1) which is intended to be filled with a sample to be analysed and extends in the measurement chamber (3), said U-shaped tube (1) being secured to the stopper in the region of the base of said U-shaped tube, which base is formed by the free ends thereof which project outwards from the measurement chamber (3) to allow the sample to be analysed to be injected via an injection opening (6) and discharged via a discharge opening (7), and
- means for allowing the U-shaped tube (1) to vibrate,
**characterised in that**, after the analysis of a sample, a rinsing solvent is injected into the injection opening (6) of the U-shaped tube (1) and the stopper (2), to which the base of the U-shaped tube (1) is fixed, is subjected to ultrasonic waves.

2. Method according to claim 1, **characterised in that** a piezoelectric or magnetostrictive ultrasonic transducer (5) is secured to the stopper (2) of the measurement chamber (3).

3. Method according to either claim 1 or claim 2, **characterised in that** the frequency of the ultrasound is between 20 and 200 kHz.
